# EUROPÄISCHE PATENTSCHRIFT

(11) **EP 1 989 456 B1**
(45) Veröffentlichungstag und Bekanntmachung des Hinweises auf die Patenterteilung: **12.05.2010**
(21) Anmeldenummer: 07711720.8
(22) Anmeldetag: 01.03.2007
(51) Int. Cl.: F16D 3/72, F16D 3/79

(54) **DREHSTEIFE BIEGEELASTISCHE WELLENKUPPLUNG, INSBESONDERE GANZSTAHLKUPPLUNG**
TORSIONALLY RIGID, FLEXIBLE SHAFT COUPLING, IN PARTICULAR FULLY-STEEL COUPLING
ACCOUPLEMENT D'ARBRE RIGIDE EN TORSION ET ELASTIQUE EN FLEXION, ET EN PARTICULIER ACCOUPLEMENT ENTIEREMENT EN ACIER

(30) Priorität: 02.03.2006 DE 102006009594
(43) Veröffentlichungstag der Anmeldung: 12.11.2008
(73) Patentinhaber: Chr. Mayr GmbH & Co. KG, 87665 Mauerstetten (DE)
(72) Erfinder: MAYR, Fritz, 87665 Mauerstetten (DE); HUBER, Johann, 87782 Oberegg (DE)
(74) Vertreter: Ruschke, Hans Edvard
(86) Internationale Anmeldenummer: PCT/EP2007/001743
(87) Internationale Veröffentlichungsnummer: WO 2007/098941

(56) Entgegenhaltungen:
- DE-A1- 19 709 950
- DE-A1- 19 709 951
- US-A- 2 639 595
- US-A- 4 708 692

## Beschreibung

### Stand der Technik

Die Erfindung bezieht sich auf drehsteife, biegeelastische Wellenkupplungen, insbesondere Ganzstahlwellenkupplung mit den Merkmalen des Oberbegriffes des Patentanspruchs 1, wie sie aus den Unterlagen der DE 197 09 950 B4 und der DE 197 09 951 C2 bekannt sind.

Bei den herkömmlichen Ausführungsformen dieser Kupplungen wird ein möglichst hohes übertragbares Drehmoment in Kombination mit einer ausreichend hohen Verlagerungsfähigkeit (d.h. Winkel-, Axial- und Radialverlagerung) der verschiedenen Teile der Kupplung zueinander gefordert.

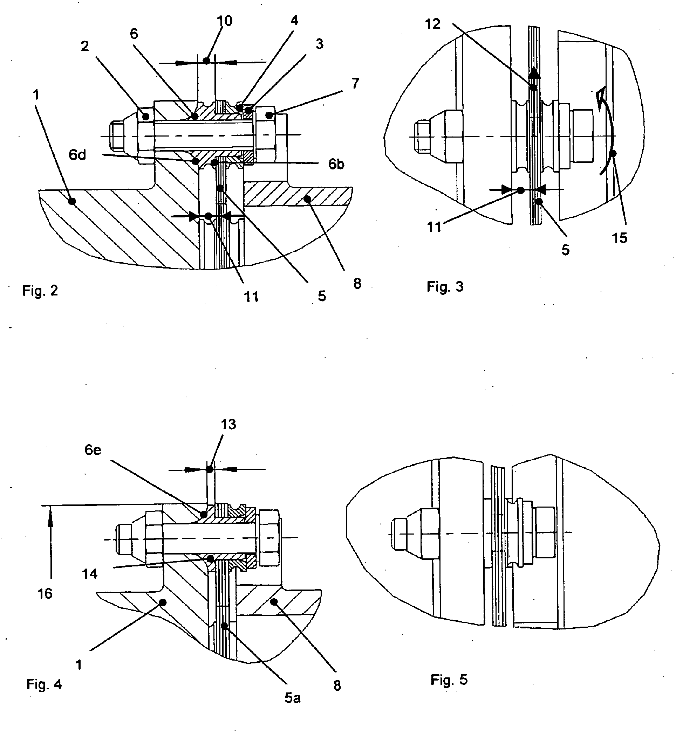

Um eine ausreichende Verlagerungsfähigkeit bei den bekannten Kupplungen zu gewährleisten, müssen ausreichend große Freiräume zwischen dem Lamellenpaket 5 und der Nabe 1 oder der Hülse 8 der Kupplung vorhanden sein (siehe insbesondere die Fig. 2 und 3). Ein wichtiges Maß hierfür ist das Abstandsmaß zwischen der Naben-Planfläche und der Stirnfläche des Lamellenpaketes, was dem Bundmaß der Bundbuchse, welche an der Nabe anliegt, entspricht. Im weiteren Verlauf wird dieses Maß mit L (Bezugszeichen 10) bezeichnet.

Im Stand der Technik beträgt das Verhältnis Bundmaß L (Bezugszeichen 10 in Fig. 2) zum Außendurchmesser D (Bezugszeichen 16 in Fig. 4) höchstens 1:40 oder kleiner.

Durch Aufrauen der Oberfläche der eingesetzten Lamellen, wie in DE 197 09 951 C2 beschrieben, können über relativ geringe Vorspannkräfte vergleichsweise hohe Drehmomente reibschlüssig auf die Bundbuchsen und dann auf die Nabe übertragen werden. Sind die Bundbuchsen geometrisch nach der DE 197 09 950 B4 ausgeführt, ist bei den allgemein üblichen Leistungsdichten eine absolute Spielfreiheit zwischen Lamellen und Nabe und der anschließenden Hülse gewährleistet.

Nachdem sich die Messmöglichkeiten der Anwender in Bezug auf den durch die Wellenkupplung auszugleichenden Radial- und Winkelversatz durch Lasergeräte und andere Messwerkzeuge enorm verbessert haben, wird meistens nicht mehr die hohe Verlagerungsfähigkeit einer drehsteifen, biegeelastischen Wellenkupplung als Hauptkriterium angesehen, sondern eher deren höhere Leistungsdichte. Als Leistungsdichte wird ein möglichst hohes übertragbares Drehmoment bei möglichst kleinem Außendurchmesser der Kupplung definiert.

Ausgehend von dem nächstliegenden Stand der Technik in Gestalt der DE 197 09 950 liegt der Erfindung die Aufgabe zugrunde, die reibschlüssig und somit spielfrei übertragbaren Drehmomente einer drehsteifen, biegeelastischen Reibkupplung massiv anzuheben. Dies wird durch die Merkmale des Anspruchs 1 erreicht.

Hierbei wird eine Reduzierung der Verlagerungsfähigkeit auf 50 - 75 % der bisherigen sonst üblichen Werte in Kauf genommen. Durch die Verlagerungseinschränkung auf ca. 50 - 75 % können die erforderlichen Freiräume zwischen Nabe 1 und Lamellenpaket 5, bzw. Lamellenpaket 5 und Hülse 8 reduziert und höhere Steifigkeiten innerhalb des Lamellenpaketes 5 geschaffen werden.

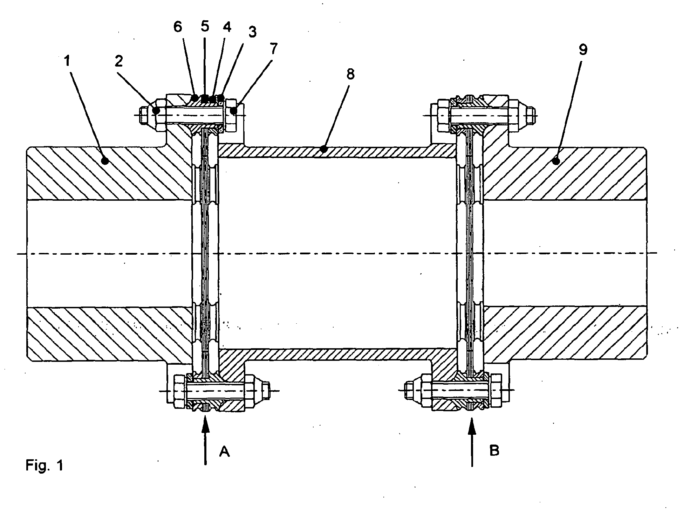

Über den im Stand der Technik nach Fig. 1-3 vorhandenen Hebelarm L1 (gemäß Bezugszeichen 11) zwischen der Mitte des Lamellenpaketes 5 und der Naben-Planfläche der Nabe 1 entsteht über die vorhandene Umfangskraft FU (Bezugszeichen 12 in Fig.3) ein Biegemoment MB (Bezugszeichen15 in Fig. 3) auf die Bundbuchse 6 sowie auf die eingesetzte Schraube 7 in der Durchgangsbohrung der Bundbuchse 6. Im Extremfall bei sehr hohen Biegemomenten kommt es zum einseitigen Abheben der Bundbuchse. Der Biegemomentanteil auf die Schraube nimmt hierbei unzulässig hohe Werte an, und auf Grund dynamischer Belastung der Schraube kann beim Stand der Technik nach den Fig. 1-3 ein Bruch der Schraube und oder der Buchse auftreten.

Das Drehmoment zwischen Bundbuchse 6 und Nabe 1 wird als Kombination zwischen Reibschluss und Formschluss mit einem Reibbeiwert zwischen Bundbuchse und Nabe von 0,1 übertragen. Beim Stand der Technik nach der DE 197 09 951 werden durch partielles Aufrauen nur der Lamellen im Bereich der Verschraubung Reibwerte von 0,3 erreicht. Das reibschlüssig übertragbare Drehmoment im Lamellenpaket ist somit um Faktor 3 höher als zwischen Bundbuchse und Nabe. Um diesen Unterschied zu kompensieren, wird der vorhandene Formschluss genutzt, welcher jedoch zu entsprechenden Beanspruchungen und somit Verformungen in den Bundbuchsen führt. Bei sehr hohen Drehmomenten entstehen nennenswerte Mikrobewegungen zwischen Bundbuchse und Nabe und als Folge hiervon entsteht Reibkorrosion und Spiel zwischen An- und Abtrieb.

Bei der Erfindung wird nun ein Beschichten der Bundbuchsen im Bereich der Radiensenkung 6e vorgenommen und somit eine erhebliche Steigerung des reibschlüssig übertragbaren Drehmomentanteils erreicht. Die Oberflächenaufrauung kann über Strahlen (z.B. Sandstrahlen) oder Beschichten (z.B. Durni Disp SiC 9 oder Ekagrip) erzeugt werden. Hierbei erfolgt eine Aufrauhung der Bundbuchse, wobei die unterschiedliche Härte der zu kombinierenden Werkstoffe wichtig ist. Die Bundbuchse muss härter als die Kontaktfläche sein.

Außerdem werden die Bundbuchsen noch in hochfestem Vergütungsstahl (z. B. 42CrMo4 oder 51 CrV4 mit einer Streckgrenze von mindestens 750 N/mm²) ausgeführt, um die vorhandenen Beanspruchungen zu ertragen.

Die axiale Länge der Bundbuchse wird erfindungsgemäß gegenüber dem Stand der Technik nach der bisherigen DE 197 09 950 B4 soweit wie möglich gekürzt, um den Abstand zwischen der Naben-Planfläche und der Stirnseite des Lamellenpaketes (das Bundmaß L = Bezugszeichens 10 in Fig. 2) so gering wie möglich zu halten. Dadurch wird der Hebelarm L1 in Fig.2 (Bezugszeichen 11) verringert und somit wird auch das Biegemoment MB in Fig. 3 (Bezugszeichen 15) auf die Bundbuchsen 6 deutlich verringert.

Des weiteren werden erfindungsgemäß die verwendeten Lamellen des Lamellenpaketes mit einer größeren Dicke ausgeführt, wie dies in Fig. 4 und 5 gezeigt ist, um die Knickbelastung der druckbelasteten Segmente eines Lamellenpaketes zu reduzieren.

Durch die aufgeführten Maßnahmen nach dieser Erfindung wird eine Drehmomentsteigerung um den Faktor 1,8 - 2 gegenüber dem aktuellen Stand der Technik erreicht. Ein weiterer Vorteil liegt darin, dass aufgrund unveränderter Schraubenabmessungen und identischer Radiengeometrie der Bundbuchsen ein problemloser Austausch bisheriger Lamellenpakete gegen drehmomentoptimierte Lamellenpakete ohne Aufwand möglich ist.

In den beigefügten Zeichnungen zeigt:
Figur 1 - den Stand der Technik im Längsschnitt;
Figur 2 - einen Ausschnitt vom Stand der Technik mit bisherigem Bundmaß L beim Bezugszeichen 10 und Hebelarm L1 beim Bezugszeichen 11;
Figur 3 - Darstellung der Umfangskraft FU beim Bezugszeichen 12 und des Biegemomentes MB beim Bezugszeichen 15;
Figur 4 - einen Ausschnitt der Erfindung mit gekürztem Bundmaß L2 beim Bezugszeichen 13und beschichteter Radiengeometrie 6e und dickeren Lamellen 5a;
Figur 5 - Draufsicht von Figur 4 mit gekürztem Bundmaß L2 beim Bezugszeichen 13.

In den Zeichnungen ist in den Figuren 4 und 5 ein Ausführungsbeispiel der Erfindung dargestellt - deren Unterschiede werden unter Bezugnahme auf den Stand der Technik nach den Fig. 1-3 und im Vergleich dazu erläutert:

Figur 1 zeigt eine drehsteife biegeelastische Wellenkupplung zur Drehmomentübertragung bei gleichzeitigem Radial-, Axial- und Winkelversatz, insbesondere eine Ganzstahlkupplung, mit einer ersten endständigen Nabe 1 (zum Anschluss an eine erste nicht näher dargestellte Welle) und einer mittleren Hülse 8 und einer zweiten Nabe 9 am anderen Ende (zur Verbindung mit einer zweiten, ebenfalls nicht dargestellten Welle). Die Drehmomentübertragung von der Nabe 1 über die Hülse 8 auf die zweite Nabe 9 erfolgt über zwei Lamellenpakete 5 (in Fig. 1 links und rechts von der Hülse 8 ersichtlich). Das Lamellenpaket 5 ist durch mehrere Lamellen innerhalb der Bundbuchse 6 mit einem Ring 4 und einer Unterlegscheibe 3 über eine Schraube 7 mit einer Mutter 2 zusammengepresst.

Figur 2 zeigt in einer Teilansicht der Fig.1 die Befestigung des Lamellenpaketes 5 mit der Bundbuchse 6, dem Ring 4 und Unterlegscheibe 3 über die Schraube 7 und Mutter 2. Außerdem wird das herkömmliche Bundmaß L durch das Bezugszeichen 10 und der davon beeinflusste bisherige Hebelarm L1 durch das Bezugszeichen 11 dargestellt, wie sie im Stand der Technik üblich sind.

Figur 3 zeigt die Umfangskraft FU (Bezugszeichen 12) an einem Anschraubpunkt des Lamellenpaketes 5 und das daraus resultierende Biegemoment MB (Bezugszeichen 15), wenn die Kupplung ein Drehmoment übertragen soll.

Figur 4 zeigt beim Bezugszeichen 13 das gegenüber dem Stand der Technik nach den Fig. 1-3 verkürzte Bundmaß L2 der neuen, axial gekürzten Bundbuchse 14, welche noch dazu eine beschichtete bzw. gestrahlte Radiengeometrie 6e und somit einen höheren Reibwert aufweist. Dies soll wie beim Bezugszeichen 6e bedeuten, dass die axial gekürzte Bundbuchse an dieser Stelle hohlkehlenartig ausgerundet ist.

Außerdem werden bei der vorliegenden Erfindung im Vergleich zu dem Stand der Technik nach den Fig. 1-3 dickere Lamellen 5a verwendet, was in Verbindung mit den stärker verkürzten Bundbuchsen insgesamt dazu führt, dass der Gesamtabstand zwischen Nabe 1 und Nabe 9 gegenüber dem Stand der Technik nach der Figur 1 etwas verringert wird.

Figur 5 zeigt die erfindungsgemäße Ausgestaltung der Wellenkupplung der Figur 4 in einer Draufsicht.

### Bezugszeichenliste

- 1: Nabe
- 2: Mutter
- 3: Unterlegscheibe
- 4: Ring
- 5: Lamellenpaket
- 5a: dickere Lamellen
- 6: Bundbuchse
- 6b: stirnseitiger Bund
- 6d: Radiensenkung
- 6e: beschichtete Radiengeometrie
- 7: Schraube
- 8: Hülse
- 9: Alternativ zweite Nabe
- 10: Bundmaß L - Stand der Technik
- 11: Hebelarm L1 - Stand der Technik
- 12: Umfangskraft FU
- 13: Bundmaß L2 - verkürzt
- 14: Gekürzte Bundbuchse vergütet
- 15: Biegemoment MB
- 16: Außendurchmesser D (Fig.4)

## Patentansprüche

1. Drehsteife biegeelastische Wellenkupplung, insbesondere GanzstahlWellenkupplung, zur Übertragung von Drehmomenten zwischen Wellen, insbesondere von Wellen mit gegeneinander versetzten Achsen, mit einer ersten Nabe (1) und einem oder zwei Lamellenpaketen (5), die auf Bundbuchsen (6) aufgesetzt und auf diesen mittels eines Ringes (4) gegen einen stirnseitigen Bund (6b) der Bundbuchsen (6) eingeklemmt sind, wobei die Lamellenpakete mittels sich durch die Bundbuchsen (6) erstreckender Schrauben (7) mit Muttern (2) in Umfangsrichtung abwechselnd mit den einander gegenüberliegenden Hülsen (8) oder zweiten Naben (9) verspannt und die Bundbuchsen in ihrem Übergangsbereich zu der Planfläche der Nabe (1) hohlkehlenartig ausgerundet sind,
**dadurch gekennzeichnet, dass** der Bund (6b) der Bundbuchsen (14) ein Maß L2 (13) in Axialrichtung zwischen der Planfläche der Nabe und der Stirnfläche des Lamellenpaketes aufweist dergestalt, dass das Bundmaß L 2 (13) zum Außendurchmesser D (16) mindestens im Verhältnis 1:50 oder größer steht, und dass die Bundbuchsen zur Steigerung des reibschlüssig übertragbaren Drehmomentanteils eine beschichtete Radiengeometrie (6e) enthalten.

2. Kupplung nach Anspruch 1, **dadurch gekennzeichnet, dass** die Oberflächenaufrauung der Radiengeometrie (6e) entweder durch Strahlen oder durch Beschichten hergestellt ist.

3. Kupplung nach Anspruch 1, **dadurch gekennzeichnet, dass** die Bundbuchsen aus hochfestem Vergütungsstahl ausgeführt sind.

## Claims

1. Torsionally rigid, flexible shaft coupling, in particular full-steel coupling, for torque transmission between shafts, in particular shafts having their axes displaced from each other, comprising a first hub (1) and one or two packs of lamella disks (5) placed on flange bushings (6) and clamped in place on them by means of a ring (4) against a shoulder (6b) on the face of said flange bushings (6), said packs of lamella disks being braced peripherally by means of threaded bolts (7) extending through said flange bushings (6) and nuts (2) and alternating with opposite sleeves (8) or second hubs (9), and said flange bushings being concavely rounded in fillet fashion at their transition to the planar surface of hub (1), **characterized in that** shoulder (6b) of bushings (14) has between the planar surface of the hub and the face of the pack of lamella disks a dimension L2 (13) in the axial direction such that the ratio of flange dimension L2 (13) to outer diameter D (16) is at least 1:50 or more, and **in that** said flanged bushings are finished at radius geometry (6e) so as to increase the frictionally transmissible proportion of the torque.

2. Coupling as in claim 1, **characterized in that** the roughened finish at radius geometry (6e) is povided by abrasive blasting or by a coating.

3. Coupling as in claim 1, **characterized by** the flanged bushings being made of high-strength quenched and tempered steel.

## Revendications

1. Accouplement d'arbres rigide en torsion et élastique en flexion, en particulier accouplement d'arbres tout acier, pour la transmission de couples de rotation entre des arbres, en particulier d'arbres avec des axes en déport mutuel, comprenant un premier moyeu (1) et un ou deux paquets de lamelles (5), qui sont mis en place sur des douilles à collet (6) et coincés sur ces dernières au moyen d'une bague (4) contre un collet (6b) du côté frontal des douilles (6), les paquets de lamelles étant serrés au moyen de vis (7), qui s'étendent au travers des douilles à collet (6), avec des écrous (2) dans la direction périphérique alternativement avec les manchons (8) en vis-à-vis mutuel ou les seconds moyeux (9) et les douilles à collet étant arrondies en forme de congé dans leur zone de transition avec la surface plane du moyeu (1), **caractérisé en ce que** le collet (6b) des douilles à collet (14) présente une cote L2 (13) dans la direction axiale entre la surface plane du moyeu et la surface frontale du paquet de lamelles de sorte que la cote de collet L2 (13) a au moins un rapport de 1 : 50 ou plus par rapport au diamètre extérieur D (16), et que les douilles à collet comportent une géométrie de rayon (6e) revêtue pour augmenter la part de couple de rotation transmissible par force de friction.

2. Accouplement suivant la revendication 1, **caractérisé en ce que** la rugosité de surface de la géométrie de rayon (6e) est créée par sablage ou par revêtement.

3. Accouplement suivant la revendication 1, **caractérisé en ce que** les douilles à collet sont réalisées en acier de traitement à résistance élevée.
